# EUROPEAN PATENT SPECIFICATION

(11) **EP 2 302 958 B1**
(45) Date of publication and mention of the grant of the patent: **13.03.2013**
(21) Application number: 09807870.2
(22) Date of filing: 18.08.2009
(51) Int. Cl.: H04W 4/00, H04L 12/24, H04L 12/751, H04L 12/703, H04L 12/913

(54) **METHOD, SYSTEM AND NET ELEMENT DEVICE FOR ALARM PERFORMANCE CONFIGURATION**
VERFAHREN, SYSTEM UND NETZELEMENT-VORRICHTUNG ZUR KONFIGURATION DER ALARM-LEISTUNGSFÄHIGKEIT
PROCÉDÉ, SYSTÈME ET DISPOSITIF D'ÉLÉMENT DE RÉSEAU POUR UNE CONFIGURATION DE PERFORMANCE D'ALARME

(30) Priority: 19.08.2008 CN 200810141930
(43) Date of publication of application: 30.03.2011
(73) Proprietor: Huawei Technologies Co., Ltd., Longgang District, Shenzhen Guangdong 518129 (CN)
(72) Inventor: YI, Qiliang, Shenzhen 518129 (CN)
(74) Representative: Pfenning, Meinig & Partner GbR
(86) International application number: PCT/CN2009/073313
(87) International publication number: WO 2010/020171

(56) References cited:
- CN-A- 1 812 367
- CN-A- 101 136 805
- US-A1- 2007 223 917
- US-A1- 2007 230 359
- LANG J P ET AL: "RSVP-TE Extensions in Support of End-to-End Generalized Multi-Protocol Label Switching (GMPLS) Recovery; rfc4872.txt", IETF STANDARD, INTERNET ENGINEERING TASK FORCE, IETF, CH, 1 May 2007 (2007-05-01), XP015052417, ISSN: 0000-0003
- TAKEHIRO TSURITANI ET AL: "Demonstration of interworking operation of GMPLS-embedded DWDM Equipments and PXCs for Reliable All-Optical Switching Networks", PROCEEDINGS / ECOC 2006, 32ND EUROPEAN CONFERENCE ON OPTICAL COMMUNICATION : 24 - 28 SEPTEMBER 2006, CANNES, FRANCE, SEE, PARIS, FRANCE, 24 September 2006 (2006-09-24), pages 1-2, XP031437508, ISBN: 978-2-912328-39-7

## Description

### FIELD OF THE TECHNOLOGY

The present invention relates to the filed of communication technologies, and more particularly, to a method, a system, and a network element device for configuring alarm performance.

### BACKGROUND OF THE INVENTION

Alarm performance is an important function in the network operation and maintenance process, and plays an important role in monitoring and locating network failures, evaluating various services provided by the network, and improving network reliability. During maintaining a Label Switched Path (LSP) in the network, some interfaces are provided on a device for a user to flexibly configure an alarm performance attribute of the LSP in the network.

However, the following problem has become apparent in the prior art.

The alarm performance configuration of the LSP is performed after a network manager delivers a command, which is inefficient if many LSPs exist.

US 2007/223917A1 discloses an information processing device, a failure notification method and a computer product. When a primary failure occurs, each agent device (information processing device) checks itself to determine whether non-notification setting has been performed for alarm notification of the primary failure. If no non-notification setting has been performed, the agent device sends the alarm notification to a manager device (network management device). At the same time, the agent device sends a set alarm mask request to the agent device located downstream in the signal flow to request to perform non-notification setting for alarm notification of a secondary failure caused by the primary failure.

US 2007/230359 A 1 discloses a path alarm processing method and device perform an alarm mask designation for an ADMIN_STATUS object of a GMPLS path message used upon path setup, and an alarm mask release designation for unused bits of a Sub-TLV object additionally generated. When an alarm generation and its recovery are recognized during alarm monitoring, the alarm mask release designation is confirmed to release an alarm mask. As the above-mentioned alarm mask release designation, at least any one of a lapse of a fixed time by a timer after a path setup, a predetermined message indicating an alarm mask release, and a predetermined number of receptions of the predetermined message can be designated.

LANG J P ET AL: "RSVP-TE Extensions in Support of End-to - End Generalized Multi-Protocol Label Switching (GMPLS) Recovery", IETF STANDARD, INTERNET ENGINEERING TASK FORCE,IETF, CH, 1 MAY 2007 (2007-05-01), XP015052417, ISSN: 0000-0003 discloses protocol-specific procedures and extensions for Generalized Multi-Protocol Label Switching (GMPLS) Resource ReSerVation Protocol - Traffic Engineering (RSVP-TE) signaling to support end-to-end Label Switched Path (LSP) recovery that denotes protection and restoration.

TAKEHIRO TSURITANI ET AL: "Demonstration of interworking operation of GMPLS-embedded DWDM Equipments and PXCs for Reliable All-Optical Switching Networks", PROCEEDINGS/ECOC 2006, 32ND EUROPEAN CONFERENCE ON OPTICAL COMMUNICATION:24-28 SEPTEMBER 2006, CANNES, FRANCE, SEE, PARIS, FRANCE 24 September 2006 (2006-09-24), pages 1-2, XP031437508, ISBN:978-2-912328-39-7 discloses demonstration of interworking operation of GMPLS-embedded DWDM Equipment and PXCs for Reliable All optical Switching Networks.

### SUMMARY OF THE INVENTION

In order to improve the efficiency of alarm performance configuration of an LSP, the present invention provides a method, a network element device, and a system for configuring alarm performance.

According to the first aspect of the present invention a method for configuring alarm performance is provided, which includes the following steps.

A network element on an LSP acquires a signaling, where the signaling carries alarm performance configuration information of the LSP, wherein the alarm performance configuration information of the LSP comprises information for indicating an alarm suppression relation on the LSP, wherein the signaling further carries preset network element configuration information, and the preset network element configuration information is for indicating whether alarm performance configuration is only performed on one or more preset network elements on the LSP, wherein the alarm performance configuration information of the LSP further comprises one or more kinds of the following information: global alarm indication information, for indicating whether to monitor all alarms on the LSP and indicating whether to report all the alarms on the LSP; global performance indication information, for indicating whether to monitor all performances on the LSP and indicating whether to report all the performances on the LSP; preset alarm indication information, for indicating whether to monitor preset alarms on the LSP and indicating whether to report the preset alarms on the LSP; and preset performance indication information, for indicating whether to monitor preset performances on the LSP and indicating whether to report the preset performances on the LSP.

The network element determine whether the alarm performance configuration is required to be performed on the network element according to the preset network element configuration information.

The network element configures an alarm performance attribute of the network element according to the alarm performance configuration information of the LSP carried in the signaling if the alarm performance configuration is required to be performed on the network element.

The network element transmit the signaling to a next network element of the network element on the LSP.

According to the second aspect of the present invention a network element device is provided, which includes a first configuring unit.

The first configuring unit is adapted to receive a signaling from a previous network element on an LSP of the network element device, where the signaling carries alarm performance configuration information of the LSP of the network element device, wherein the alarm performance configuration information of the LSP comprises information for indicating an alarm suppression relation on the LSP, wherein the signaling further carries preset network element configuration information, and the preset network element configuration information is for indicating whether alarm performance configuration is only performed on one or more preset network elements on the LSP, wherein the alarm performance configuration information of the LSP further comprises one or more kinds of the following information: global alarm indication information, for indicating whether to monitor all alarms on the LSP and indicating whether to report all the alarms on the LSP; global performance indication information, for indicating whether to monitor all performances on theLSP and indicating whether to report all the performances on the LSP; preset alarm indication information, for indicating whether to monitor preset alarms on the LSP and indicating whether to report the preset alarms on the LSP; and preset performance indication information, for indicating whether to monitor preset performances on the LSP and indicating whether to report the preset performances on the LSP; determine whether the alarm performance configuration is required to be performed on the network element device according to the preset network element configuration information, and configure an alarm performance attribute of the network element device according to the alarm performance configuration information of the LSP carried in the signaling if the alarm performance configuration is required to be performed on the network element.

Preferably, the network element device further includes a first sending unit, adapted to transmit the signaling to a next network element of the network element device on the LSP.

According to the third aspect of the present invention a network element device is provided, which includes a second configuring unit and a second sending unit.

The second configuring unit is adapted to acquire alarm performance configuration information of an LSP of the network element device, wherein the alarm performance configuration information of the LSP comprises information for indicating an alarm suppression relation on the LSP, and initiate a signaling, where the signaling carries the alarm performance configuration information of the LSP, and preset network element configuration information, wherein the preset network element configuration information is for indicating whether alarm performance configuration is only performed on one or more preset network elements on the LSP, wherein the alarm performance configuration information of the LSP further comprises one or more kinds of the following information: global alarm indication information, for indicating whether to monitor all alarms on the LSP and indicating whether to report all the alarms on the LSP; global performance indication information, for indicating whether to monitor all performances on the LSP and indicating whether to report all the performances on the LSP; preset alarm indication information, for indicating whether to monitor preset alarms on the LSP and indicating whether to report the preset alarms on the LSP; and preset performance indication information, for indicating whether to monitor preset performances on the LSP and indicating whether to report the preset performances on the LSP, and determine whether the alarm performance configuration is required to be performed on the network element device according to the preset network element configuration information; and configure an alarm performance attribute of the source network element device according to the alarm performance configuration information of the LSP carried in the signaling if the alarm performance configuration is required to be performed on the network element.

The second sending unit is adapted to transmit the signaling to a next network clement of the network element device on the LSP.

According to the fourth aspect of the present invention a system for configuring alarm performance is provided, which includes a source network element according to the third aspect of the present invention and a destination network element according to the second aspect of the present invention located on an LSP.

According to the present invention, automatic alarm performance configuration of the LSP can be implemented by transmitting signaling along network elements on the LSP and carrying the alarm performance configuration information in the signaling, thus reducing a workload for a user to perform the alarm performance configuration.

### BRIEF DESCRIPTION OF THE DRAWINGS

FIG. 1 is a flow chart of a method for configuring alarm performance according to an embodiment of the present invention;
FIG. 2 is a schematic view of an LSP which carries alarm performance configuration information by using a Path message in a Resource Reservation Protocol Traffic Engineering (RSVP-TE) signaling according to an embodiment of the present invention; and
FIG. 3 is a schematic diagram of an LSP on which alarm performance configuration is required to be performed after rerouting occurs according to an embodiment of the present invention.

### DETAILED DESCRIPTION OF THE EMBODIMENTS

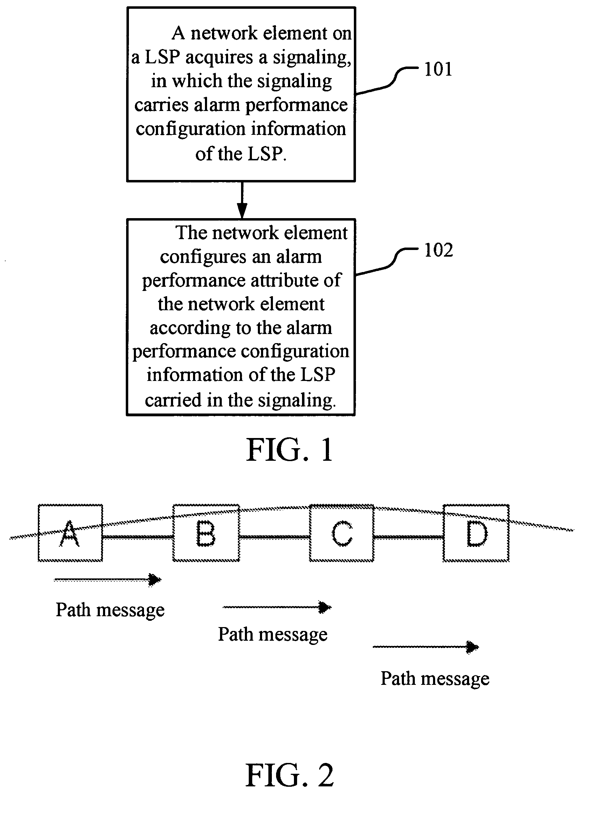

As shown in FIG. 1, a method for configuring alarm performance according to an embodiment of the present invention includes the following steps.

In step 101, a network element on an LSP acquires a signaling, where the signaling carries alarm performance configuration information of the LSP.

The alarm performance configuration information of the LSP may include one or more types of the following information: global alarm indication information, for indicating whether to monitor all alarms on the LSP and indicating whether to report all the alarms on the LSP; global performance indication information, for indicating whether to monitor all performances on the LSP and indicating whether to report all the performances on the LSP; preset alarm indication information, for indicating whether to monitor preset alarms on the LSP and indicating whether to report the preset alarms on the LSP; and preset performance indication information, for indicating whether to monitor preset performances on the LSP and indicating whether to report the preset performances on the LSP.

When the alarm performance configuration information of the LSP includes several kinds of information, the alarm performance configuration information of the LSP may further include one or more types of the following information: information for indicating an alarm suppression relation on the LSP, and information for indicating an alarm level.

Generally, when the alarm performance configuration information of the LSP includes both the global alarm indication information and the preset alarm indication information, alarm performance configuration is performed by default according to contents of the preset alarm indication information, that is, a priority of the preset alarm indication information is higher than that of the global alarm indication information. Definitely, it is easily understood that it is also possible to set in advance to perform the alarm performance configuration according to contents of the global alarm indication information by default, that is, to set that the priority of the global alarm indication information is higher than that of the preset alarm indication information. Similarly, the alarm performance configuration can be generally performed by default according to contents of the preset performance indication information, when the alarm performance configuration information of the LSP includes both the global performance indication information and the preset performance indication information. Definitely, it is easily understood that it is also possible to set in advance to perform the alarm performance configuration according to the global performance indication information by default.

When an LSP has been established in the network and no service is accessed, a user may not want to see the alarm performance on the LSP. Here, an alarm performance attribute of a network element on the LSP can be configured to not monitor and not report all the alarm performances on the LSP by setting the global alarm indication information in the alarm performance configuration information of the LSP to indicate not to monitor and not to report all alarms on the LSP and setting the global performance indication information to indicate not to monitor and not to report all performances on the LSP.

When the LSP is in a test state, the user may want to see only some concerned alarms or performances. Here, the user can configure the alarm performance attribute of the network element on the LSP to only monitor and report the concerned alarms and the concerned performances of the user and not to monitor and report other alarms and performances, by setting the preset alarm indication information and the preset performance indication information in the alarm performance configuration information of the LSP to monitor and report the concerned alarms and the concerned performances of the user.

When one failure occurs in the network, several alarms may be generated. For example, if one optical fiber is interrupted in a Synchronous Digital Hierarchy (SDH) network, many alarms may occur, such as Loss of Signal (LOS), Multiplex Section AIS (MS-AIS) and Tributary Unit AIS (TU-AIS). If all the alarms are reported to a user, it will be more difficult for the user to locate the failure. Therefore, the user can configure an alarm suppression relation on the LSP by setting information for indicating the alarm suppression relation on the LSP in the alarm performance configuration information of the LSP. For example, the LOS alarm is set to suppress the MS-AIS alarm, the MS-AIS alarm is set to suppress the TU-AIS alarm, when the LOS alarm, the MS-AIS alarm, and the TU-AIS alarm occur on a network element at the same time, only the LOS alarm will be reported; and when the MS-AIS alarm and the TU-AIS alarm occur on a network element at the same time, only the MS-AIS alarm will be reported, thus reducing the number of alarms reported to the user.

In step 102, the network element on the LSP configures an alarm performance attribute of the network element according to the alarm performance configuration information of the LSP carried in the signaling.

In an embodiment of the present invention, the alarm performance configuration information of the LSP includes the global alarm indication information.

When the global alarm indication information indicates to monitor but not to report all the alarms on the LSP, accordingly, the configuring the alarm performance attribute of the network element according to the alarm performance configuration information of the LSP carried in the signaling includes configuring the alarm performance attribute of the network element to monitor but not to report all the alarms on the LSP.

When the global alarm indication information indicates to monitor and report all the alarms on the LSP, accordingly, the configuring the alarm performance attribute of the network element according to the alarm performance configuration information of the LSP carried in the signaling includes configuring the alarm performance attribute of the network element to monitor and report all the alarms on the LSP.

When the global alarm indication information indicates not to monitor and not to report all the alarms on the LSP, accordingly, the configuring the alarm performance attribute of the network element according to the alarm performance configuration information of the LSP carried in the signaling includes configuring the alarm performance attribute of the network element not to monitor and not to report all the alarms on the LSP.

The alarm performance configuration information of the LSP may further include the global performance indication information.

When the global alarm indication information indicates to monitor but not to report all the performances on the LSP, accordingly, the configuring the alarm performance attribute of the network element according to the alarm performance configuration information of the LSP carried in the signaling includes configuring the alarm performance attribute of the network element to monitor but not to report all the performances on the LSP.

When the global alarm indication information indicates to monitor and report all the performances on the LSP, accordingly, the configuring the alarm performance attribute of the network element according to the alarm performance configuration information of the LSP carried in the signaling includes configuring the alarm performance attribute of the network element to monitor and report all the performances on the LSP.

When the global alarm indication information indicates not to monitor and not to report all the performances on the LSP, accordingly, the configuring the alarm performance attribute of the network element according to the alarm performance configuration information of the LSP carried in the signaling includes configuring the alarm performance attribute of the network element not to monitor and not to report all the performances on the LSP.

The alarm performance configuration information of the LSP may only include the global alarm indication information, or only include the global performance indication information, or include both the global alarm indication information and the global performance indication information.

In another embodiment of the present invention, the alarm performance configuration information of the LSP may include the preset alarm indication information.

When the preset alarm indication information indicates to monitor but not to report one or more preset alarms, accordingly, the configuring the alarm performance attribute of the network element according to the alarm performance configuration information of the LSP carried in the signaling includes configuring the alarm performance attribute of the network element to monitor but not to report the one or more preset alarms.

When the preset alarm indication information indicates to monitor and to report one or more preset alarms, accordingly, the configuring the alarm performance attribute of the network element according to the alarm performance configuration information of the LSP carried in the signaling includes configuring the alarm performance attribute of the network element to monitor and to report the one or more preset alarms.

When the preset alarm indication information indicates not to monitor and not to report one or more preset alarms, accordingly, the configuring the alarm performance attribute of the network element according to the alarm performance configuration information of the LSP carried in the signaling includes configuring the alarm performance attribute of the network element not to monitor and not to report the one or more preset alarms.

The alarm performance configuration information of the LSP may further include the preset performance indication information.

When the preset alarm indication information indicates to monitor but not to report one or more preset performances, accordingly, the configuring the alarm performance attribute of the network element according to the alarm performance configuration information of the LSP carried in the signaling includes configuring the alarm performance attribute of the network element to monitor but not to report the one or more preset performances.

When the preset alarm indication information indicates to monitor and to report one or more preset performances, accordingly, the configuring the alarm performance attribute of the network element according to the alarm performance configuration information of the LSP carried in the signaling includes configuring the alarm performance attribute of the network element to monitor and to report the one or more preset performances.

When the preset alarm indication information indicates not to monitor and not to report one or more preset performances, accordingly, the configuring the alarm performance attribute of the network element according to the alarm performance configuration information of the LSP carried in the signaling includes configuring the alarm performance attribute of the network element not to monitor and not to report the one or more preset performances.

The alarm performance configuration information of the LSP may only include the preset alarm indication information, or only include the preset performance indication information, or include both the preset alarm indication information and the preset performance indication information.

It should be noted that, in the embodiments of the present invention, the alarm performance configuration information of the LSP includes at least one of the following information: the global alarm indication information, the global performance indication information, the preset alarm indication information, and the preset performance indication information. The specific implementations of them are similar, and will not be repeated herein.

In the present invention, automatic alarm performance configuration of the LSP can be implemented by transmitting signaling along network elements on the LSP and carrying the alarm performance configuration information in the signaling, thus reducing the workload for a user to perform the alarm performance configuration.

In an embodiment of the present invention in the following, an RSVP-TE signaling is taken as an example, but it is not limited to the protocol in actual applications. The protocol signaling, such as a Constraint-based Routed Label Distribution Protocol (CR-LDP) and a Private Network-Node Interface (PNNI), may also employ the solutions of the present invention.

FIG. 2 shows an LSP which carries alarm performance configuration information by using a Path message in an RSVP-TE signaling. The LSP passes through four network elements being A, B, C, and D. At a particular moment, a user tests the LSP. The alarm performance configuration information of the LSP includes global performance indication information, preset alarm indication information, and information for indicating the alarm suppression relation on the LSP. Specific settings of the information are as follows: The global performance indication information indicates not to monitor and not to report all the performances on the LSP, the preset alarm indication information indicates not to monitor and not to report a TU-AIS alarm and a TU-LOP alarm, and the information for indicating the alarm suppression relation on the LSP is set to be that a LOS alarm suppresses an MS-AIS alarm. The alarm performance configuration information required by the user is carried through the Path message in the RSVP-TE signaling. Each network element through which the LSP passes implements the configuration of the alarm performance attribute of the network element according to the alarm performance configuration information carried in the Path message after receiving the Path message.

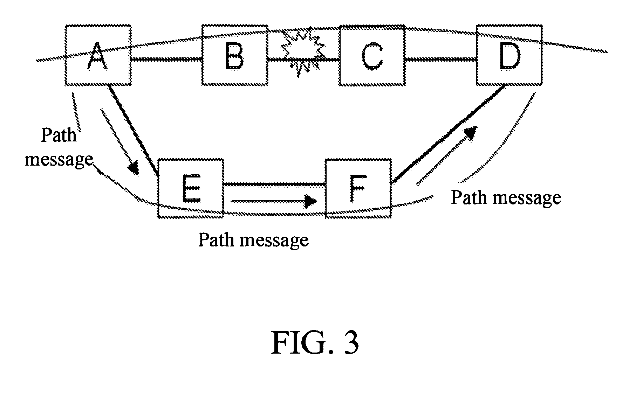

FIG. 3 shows an LSP on which alarm performance configuration is required to be performed after rerouting occurs. The alarm performance configuration information of the LSP includes preset performance indication information, and the preset performance indication information indicates not to monitor and not to report Continuity Check (CC) and Jitter. The LSP passes through four network elements being A-B-C-D. At a particular moment, a B-C link is interrupted, the network element A initiates rerouting to the LSP, and the rerouted LSP passes through four network elements being A-E-F-D. The alarm performance information of the LSP configured by a user before rerouting is not to monitor and not to report CC and Jitter. Therefore, when the node A establishes the rerouted LSP through signaling, the alarm performance configuration information is carried in the signaling, so that the rerouted LSP has the same alarm performance configuration as the LSP before rerouting, thus greatly reducing the workload for the user to perform the manual alarm performance information configuration.

Based on the implementation of the above method, in an embodiment, the present invention provides a network element, which includes a first configuring unit.

The first configuring unit is adapted to receive a signaling, where the signaling carries alarm performance configuration information of an LSP of the network element device; and configure the alarm performance attribute of the network element device according to the alarm performance configuration information of the LSP carried in the signaling.

The network element device may further include a first sending unit, adapted to transmit the signaling to a next network element of the network element device on the LSP.

In another embodiment, the present invention provides a network element device, which includes a second configuring unit and a second sending unit.

The second configuring unit is adapted to acquire alarm performance configuration information of an LSP of the network element device, and initiate a signaling, where the signaling carries the alarm performance configuration information of the LSP; and configure the alarm performance attribute of the network element device according to the alarm performance configuration information of the LSP carried in the signaling.

The second sending unit is adapted to transmit the signaling to a next network element of the network element device on the LSP.

In an embodiment, the present invention further provides a network element device. The network element device may be an intermediate network element, and includes a first configuring unit and a first sending unit.

The first configuring unit is adapted to receive a signaling from a previous network element on a LSP of the network element device, and configure the alarm performance attribute of the network element device according to alarm performance configuration information of the LSP carried in the signaling.

The first sending unit is adapted to transmit the signaling to a next network element of the network element device on the LSP.

In an embodiment, the present invention further provides a network element device. The network element device may be a source network element, and includes a second configuring unit and a second sending unit.

The second configuring unit is adapted to acquire alarm performance configuration information of an LSP of the network element device, and initiate a signaling, where the signaling carries the alarm performance configuration information of the LSP; and configure an alarm performance attribute of the source network element device according to the alarm performance configuration information of the LSP carried in the signaling.

The second sending unit is adapted to transmit the signaling to a next network element of the network element device on the LSP.

In an embodiment, the present invention further provides a network element device. The network element device may be a destination network element, and includes a third configuring unit.

The third configuring unit is adapted to receive a signaling from a previous network element on an LSP of the network element device, where the signaling carries alarm performance configuration information of the LSP; and configure an alarm performance attribute of the network element device according to the alarm performance configuration information of the LSP carried in the signaling.

In an embodiment, the present invention further provides a system for configuring alarm performance, which includes a source network element and a destination network element located on an LSP.

The source network element is adapted to acquire alarm performance configuration information of the LSP, and initiate a signaling, where the signaling carries the alarm performance configuration information of the LSP; configure an alarm performance attribute of the source network element according to the alarm performance configuration information of the LSP carried in the signaling; and transmit the signaling to a next network element of the source network element on the LSP.

The destination network element is adapted to acquire a signaling from a previous network element of the destination network element on the LSP, where the LSP carries the signaling carries the alarm performance configuration information of the LSP; and configure an alarm performance attribute of the network element according to the alarm performance configuration information of the LSP carried in the signaling.

An intermediate network element may further exist between the source network element and the destination network element on the LSP. The intermediate network element is adapted to receive a signaling from a previous network element of the intermediate network on the LSP, and configure an alarm performance attribute of the intermediate network element according to alarm performance configuration information of the LSP carried in the signaling; and transmit the signaling to a next network element of the intermediate network element on the LSP.

In the present invention, automatic alarm performance configuration of the LSP can be implemented by transmitting signaling along network elements on the LSP and carrying the alarm performance configuration information in the signaling, thus reducing the workload for a user to perform the alarm performance configuration.

In another embodiment, the present invention provides a method for configuring alarm performance. The difference between the method and the method for configuring alarm performance according to the foregoing embodiment is that, in addition to the alarm performance configuration information of the LSP, preset network element configuration information is carried in the signaling acquired by the network element on the LSP, where the preset network element configuration information is for indicating whether alarm performance configuration is performed on only one or more preset network elements on the LSP. The method includes the following steps.

A network element on a LSP acquires a signaling, where the signaling carries alarm performance configuration information of the LSP and preset network element configuration information, where the preset network element configuration information is for indicating whether the alarm performance configuration is performed on only one or more preset network elements on the LSP.

The network element determines whether the alarm performance configuration is required to be performed on the network element according to the preset network element configuration information.

If the alarm performance configuration is required to be performed on the network element, an alarm performance attribute of the network element is configured according to the alarm performance configuration information of the LSP.

On the one hand, in the method for configuring alarm performance, when the preset network element configuration information indicates that alarm performance configuration is performed on one or more preset network elements on the LSP, the network element determining whether alarm performance configuration is required to be performed on the network element according to the preset network element configuration information includes the following steps.

The network element determines whether the network element belongs to the preset network elements.

If the network element belongs to the preset network elements, it is determined that the alarm performance configuration is required to be performed on the network element. If the network element does not belong to the preset network elements, it is determined that the alarm performance configuration is not required to be performed on the network element.

On the other hand, in the method for configuring alarm performance, when the preset network element configuration information indicates that the alarm performance configuration is not performed on one or more preset network elements on the LSP, the network element determining whether alarm performance configuration is required to be performed on the network element according to the preset network element configuration information includes the following steps.

The network element determines whether the network element belongs to the preset network elements.

If the network element does not belong to the preset network elements, it is determined that the alarm performance configuration is required to be performed on the network element. If the network element belongs to the preset network elements, it is determined that the alarm performance configuration is not required to be performed on the network element.

The alarm performance configuration information of the LSP may include one or more types of the following information: global alarm indication information, for indicating whether to monitor all alarms on the LSP and indicating whether to report all the alarms on the LSP; global performance indication information, for indicating whether to monitor all performances on the LSP and indicating whether to report all the performances on the LSP; preset alarm indication information, for indicating whether to monitor preset alarms on the LSP and indicating whether to report the preset alarms on the LSP; and preset performance indication information, for indicating whether to monitor preset performances on the LSP and indicating whether to report the preset performances on the LSP.

When it is determined that alarm performance configuration is required to be performed on the network element, a possible case is in the following.

The alarm performance configuration information of the LSP includes the global alarm indication information.

When the global alarm indication information indicates to monitor but not to report all the alarms on the LSP, accordingly, the configuring the alarm performance attribute of the network element according to the alarm performance configuration information of the LSP carried in the signaling includes configuring the alarm performance attribute of the network element to monitor but not to report all the alarms on the LSP.

When the global alarm indication information indicates to monitor and report all the alarms on the LSP, accordingly, the configuring the alarm performance attribute of the network element according to the alarm performance configuration information of the LSP carried in the signaling includes configuring the alarm performance attribute of the network element to monitor and report all the alarms on the LSP.

When the global alarm indication information indicates not to monitor and not to report all the alarms on the LSP, accordingly, the configuring the alarm performance attribute of the network element according to the alarm performance configuration information of the LSP carried in the signaling includes configuring the alarm performance attribute of the network element not to monitor and not to report all the alarms on the LSP.

In addition, the alarm performance configuration information of the LSP may further include the global performance indication information.

When the global alarm indication information indicates to monitor but not to report all the performances on the LSP, accordingly, the configuring the alarm performance attribute of the network element according to the alarm performance configuration information of the LSP carried in the signaling includes configuring the alarm performance attribute of the network element to monitor but not to report all the performances on the LSP.

When the global alarm indication information indicates to monitor and report all the performances on the LSP, accordingly, the configuring the alarm performance attribute of the network element according to the alarm performance configuration information of the LSP carried in the signaling includes configuring the alarm performance attribute of the network element to monitor and report all the performances on the LSP.

When the global alarm indication information indicates not to monitor and not to report all the performances on the LSP, accordingly, the configuring the alarm performance attribute of the network element according to the alarm performance configuration information of the LSP carried in the signaling includes configuring the alarm performance attribute of the network element not to monitor and not to report all the performances on the LSP.

The alarm performance configuration information of the LSP may only include the global alarm indication information, or only include the global performance indication information, or include both the global alarm indication information and the global performance indication information.

When it is determined that alarm performance configuration is required to be performed on the network element, another possible case is that the alarm performance configuration information of the LSP includes the preset alarm indication information.

When the preset alarm indication information indicates to monitor but not to report one or more preset alarms, accordingly, the configuring the alarm performance attribute of the network element according to the alarm performance configuration information of the LSP carried in the signaling includes configuring the alarm performance attribute of the network element to monitor but not to report the one or more preset alarms.

When the preset alarm indication information indicates to monitor and to report one or more preset alarms, accordingly, the configuring the alarm performance attribute of the network element according to the alarm performance configuration information of the LSP carried in the signaling includes configuring the alarm performance attribute of the network element to monitor and to report the one or more preset alarms.

When the preset alarm indication information indicates not to monitor and not to report one or more preset alarms, accordingly, the configuring the alarm performance attribute of the network element according to the alarm performance configuration information of the LSP carried in the signaling includes configuring the alarm performance attribute of the network element not to monitor and not to report the one or more preset alarms.

In addition, the alarm performance configuration information of the LSP may further include the preset performance indication information.

When the preset alarm indication information indicates to monitor but not to report one or more preset performances, accordingly, the configuring the alarm performance attribute of the network element according to the alarm performance configuration information of the LSP carried in the signaling includes configuring the alarm performance attribute of the network element to monitor but not to report the one or more preset performances.

When the preset alarm indication information indicates to monitor and to report one or more preset performances, accordingly, the configuring the alarm performance attribute of the network element according to the alarm performance configuration information of the LSP carried in the signaling includes configuring the alarm performance attribute of the network element to monitor and to report the one or more preset performances.

When the preset alarm indication information indicates not to monitor and not to report one or more preset performances, accordingly, the configuring the alarm performance attribute of the network element according to the alarm performance configuration information of the LSP carried in the signaling includes configuring the alarm performance attribute of the network element not to monitor and not to report the one or more preset performances.

The alarm performance configuration information of the LSP may only include the preset alarm indication information, or only include the preset performance indication information, or include both the preset alarm indication information and the preset performance indication information.

In an embodiment, the present invention further provides a network element device, which includes a signaling acquiring unit, a determining unit, and a configuring unit.

The signaling acquiring unit is adapted to acquire a signaling, where the signaling carries alarm performance configuration information of an LSP of the network element device and preset network element configuration information, and the preset network element configuration information is for indicating whether alarm performance configuration is performed on only one or more preset network elements on the LSP.

The determining unit is adapted to determine whether alarm performance configuration is required to be performed on the network element device according to the preset network element configuration information.

The configuring unit is adapted to configure an alarm performance attribute of the network element according to the alarm performance configuration information of the LSP, when the determining unit determines that the alarm performance configuration is required to be performed on the network element device.

In the present invention, the automatic alarm performance configuration of the LSP can be implemented by transmitting signaling along network elements on the LSP and carrying the alarm performance configuration information in the signaling, thus reducing the workload for a user to perform the alarm performance configuration.

Through the descriptions of the preceding embodiments, those skilled in the art may understand that the present invention may be implemented by using hardware only or by using software and a necessary universal hardware platform. Based on such understandings, all or part of the technical solution under the present invention that makes contributions to the prior art may be essentially embodied in the form of a software product. The software product may be stored in a storage medium, which can be a magnetic disk, a Compact Disk Read-Only Memory (CD-ROM), a Read-Only Memory (ROM) or a Random Access Memory (RAM). The software product includes a number of instructions that enable a computer device (personal computer, server, or network device) to execute the methods according to the embodiments of the present invention.

## Claims

1. A method for configuring alarm performance, comprising:
acquiring (101), by a network element on a Label Switched Path, LSP, a signaling, wherein the signaling carries alarm performance configuration information of the LSP, wherein the alarm performance configuration information of the LSP comprises information for indicating an alarm suppression relation on the LSP, wherein the signaling further carries preset network element configuration information, and the preset network element configuration information is for indicating whether alarm performance configuration is only performed on one or more preset network elements on the LSP; wherein the alarm performance configuration information of the LSP further comprises one or more kinds of the following information:global alarm indication information, for indicating whether to monitor all alarms on the LSP and indicating whether to report all the alarms on the LSP; global performance indication information, for indicating whether to monitor all performances on the LSP and indicating whether to report all the performances on the LSP; preset alarm indication information, for indicating whether to monitor preset alarms on the LSP and indicating whether to report the preset alarms on the LSP; and preset performance indication information, for indicating whether to monitor preset performances on the LSP and indicating whether to report the preset performances on the LSP;
determining, by the network element, whether the alarm performance configuration is required to be performed on the network element according to the preset network element configuration information; and
configuring (102), by the network element, an alarm performance attribute of the network element according to the alarm performance configuration information of the LSP carried in the signaling if the alarm performance configuration is required to be performed on the network element;
transmitting, by the network element, the signaling to a next network element of the network element on the LSP.

2. The method according to claim 1, wherein
the alarm performance configuration information of the LSP comprises the global alarm indication information;
when the global alarm indication information indicates to monitor but not to report all the alarms on the LSP,
accordingly, the configuring the alarm performance attribute of the network element according to the alarm performance configuration information of the LSP carried in the signaling comprises configuring the alarm performance attribute of the network element to monitor but not to report all the alarms on the LSP; or
when the global alarm indication information indicates to monitor and report all the alarms on the LSP,
accordingly, the configuring the alarm performance attribute of the network element according to the alarm performance configuration information of the LSP carried in the signaling comprises configuring the alarm performance attribute of the network element to monitor and report all the alarms on the LSP;
or
when the global alarm indication information indicates not to monitor and not to report all the alarms on the LSP,
accordingly, the configuring the alarm performance, attribute of the network element according to the alarm performance configuration information of the LSP carried in the signaling comprises configuring the alarm performance attribute of the network element not to monitor and not to report all the alarms on the LSP.

3. The method according to claim 1, wherein
the alarm performance configuration information of the LSP comprises the global performance indication information;
when the global alarm indication information indicates to monitor but not to report all the performances on the LSP,
accordingly, the configuring the alarm performance attribute of the network element according to the alarm performance configuration information of the LSP carried in the signaling comprises configuring the alarm performance attribute of the network element to monitor but not to report all the performances on the LSP; or
when the global alarm indication information indicates to monitor and report all the performances on the LSP,
accordingly, the configuring the alarm performance attribute of the network element according to the alarm performance configuration information of the LSP carried in the signaling comprises configuring the alarm performance attribute of the network element to monitor and report all the performances on the LSP;
or
when the global alarm indication information indicates not to monitor and not to report all the performances on the LSP,
accordingly, the configuring the alarm performance attribute of the network element according to the alarm performance configuration information of the LSP carried in the signaling comprises configuring the alarm performance attribute of the network element not to monitor and not to report all the performances on the LSP.

4. The method according to claim 1, wherein
the alarm performance configuration information of the LSP comprises the preset alarm indication information;
when the preset alarm indication information indicates to monitor but not to report one or more preset alarms,
accordingly, the configuring the alarm performance attribute of the network element according to the alarm performance configuration information of the LSP carried in the signaling comprises configuring the alarm performance attribute of the network element to monitor but not to report the one or more preset alarms; or
when the preset alarm indication information indicates to monitor and to report the one or more preset alarms,
accordingly, the configuring the alarm performance attribute of the network element according to the alarm performance configuration information of the LSP carried in the signaling comprises configuring the alarm performance attribute of the network element to monitor and to report the one or more preset alarms; or
when the preset alarm indication information indicates not to monitor and not to report the one or more preset alarms,
accordingly, the configuring the alarm performance attribute of the network element according to the alarm performance configuration information of the LSP carried in the signaling comprises configuring the alarm performance attribute of the network element not to monitor and not to report the one or more preset alarms.

5. The method according to claim 1, wherein
the alarm performance configuration information of the LSP comprises the preset performance indication information;
when the preset alarm indication information indicates to monitor but not to report one or more preset performances,
accordingly, the configuring the alarm performance attribute of the network element according to the alarm performance configuration information of the LSP carried in the signaling comprises configuring the alarm performance attribute of the network element to monitor but not to report the one or more preset performances; or
when the preset alarm indication information indicates to monitor and to report the one or more preset performances,
accordingly, the configuring the alarm performance attribute of the network element according to the alarm performance configuration information of the LSP carried in the signaling comprises configuring the alarm performance attribute of the network element to monitor and to report the one or more preset performances; or
when the preset alarm indication information indicates not to monitor and not to report the one or more preset performances,
accordingly, the configuring the alarm performance attribute of the network element according to the alarm performance configuration information of the LSP carried in the signaling comprises configuring the alarm performance attribute of the network element not to monitor and not to report the one or more preset performances.

6. The method according to any one of claims 1 to 5, wherein when the alarm performance configuration information of the LSP comprises several kinds of information, the alarm performance configuration information of the LSP further comprises one or more kinds of the following information:
information for indicating an alarm suppression relation on the LSP; and information for indicating an alarm level.

7. The method according to claim 1, wherein,
when the preset network element configuration information indicates that alarm performance configuration is performed on one or more preset network elements on the LSP,
the determining, by the network element, whether the alarm performance configuration is required to be performed on the network element according to the preset network element configuration information comprises:
determining, by the network element, whether the network element belongs to the preset network elements; and
determining that the alarm performance configuration is required to be performed on the network element, if the network element belongs to the preset network elements; or
when the preset network element configuration information indicates that the alarm performance configuration is not performed on the one or more preset network elements on the LSP,
the determining, by the network element, whether the alarm performance configuration is required to be performed on the network element according to the preset network element configuration information comprises
determining, by the network element, whether the network element belongs to the preset network elements; and
determining that alarm performance configuration is required to be performed on the network element, if the network element does not belong to the preset network elements.

8. A network element device, comprising:
a first configuring unit, adapted to receive a signaling from a previous network element device on a Label Switched Path, LSP, of the network element device, wherein the signaling carries alarm performance configuration information of the LSP of the network element device, wherein the alarm performance configuration information of the LSP comprises information for indicating an alarm suppression relation on the LSP, wherein the signaling further carries preset network element configuration information, and the preset network element configuration information is for indicating whether alarm performance configuration is only performed on one or more preset network elements on the LSP; wherein the alarm performance configuration information of the LSP further comprises one or more kinds of the following information: global alarm indication information, for indicating whether to monitor all alarms on the LSP and indicating whether to report all the alarms on the LSP; global performance indication information, for indicating whether to monitor all performances on the LSP and indicating whether to report all the performances on the LSP; preset alarm indication information, for indicating whether to monitor preset alarms on the LSP and indicating whether to report the preset alarms on the LSP; and preset performance indication information, for indicating whether to monitor preset performances on the LSP and indicating whether to report the preset performances on the LSP; and to determine whether the alarm performance configuration is required to be performed on the network element device according to the preset network element configuration information, and to configure an alarm performance attribute of the network element device according to the alarm performance configuration information of the LSP carried in the signaling if the alarm performance configuration is required to be performed on the network element.

9. The network element device according to claim 8, further comprising:
a first sending unit, adapted to transmit the signaling to a next network element of the network element device on the LSP.

10. A network element device, comprising:
a second configuring unit, adapted to acquire alarm performance configuration information of a Label Switched Path, LSP, of the network element device, wherein the alarm performance configuration information of the LSP comprises information for indicating an alarm suppression relation on the LSP, and initiate a signaling, wherein the signaling carries the alarm performance configuration information of the LSP, and preset network element configuration information, wherein the preset network element configuration information is for indicating whether alarm performance configuration is only performed on one or more preset network elements on the LSP, wherein the alarm performance configuration information of the LSP further comprises one or more kinds of the following information: global alarm indication information, for indicating whether to monitor all alarms on the LSP and indicating whether to report all the alarms on the LSP; global performance indication information, for indicating whether to monitor all performances on the LSP and indicating whether to report all the performances on the LSP; preset alarm indication information, for indicating whether to monitor preset alarms on the LSP and indicating whether to report the preset alarms on the LSP; and preset performance indication information, for indicating whether to monitor preset performances on the LSP and indicating whether to report the preset performances on the LSP; and to determine whether the alarm performance configuration is required to be performed on the network element device according to the preset network element configuration information, and to configure an alarm performance attribute of the network element device according to the alarm performance configuration information of the LSP carried in the signaling if the alarm performance configuration is required to be performed on the network element; and
a second sending unit, adapted to transmit the signaling to a next network element of the network element device on the LSP.

11. A system for configuring alarm performance, comprising a source network element according to claim 10 and a destination network element according to claim 8 located on a Label Switched Path , LSP,

12. The system according to claim 11, wherein an intermediate network element further exists between the source network element and the destination network element on the LSP, and the intermediate network element is adapted to:
receive a signaling from a previous network element of the intermediate network element on the LSP, and configure an alarm performance attribute of the intermediate network element according to alarm performance configuration information of the LSP carried in the signaling; and
transmit the signaling to a next network element of the intermediate network element on the LSP.

## Patentansprüche

1. Verfahren zum Konfigurieren der Alarmdurchführung, umfassend:
Beschaffen (101) einer Signalisierung durch ein Netzwerkelement auf einem Label Switched Path, LSP, wobei die Signalisierung Alarmdurchführungs-Konfigurationsinformationen des LSP führt, wobei die Alarmdurchführungs-Konfigurationsinformationen des LSP Informationen zur Angabe einer Alarmunterdrückungsbeziehung auf dem LSP umfassen, wobei die Signalisierung ferner Voreingestelltes-Netzwerkelement-Konfigurationsinformationen führt und die Voreingestelltes-Netzwerkelement-Konfigurationsinformationen dazu dienen, anzugeben, ob Alarmdurchführungskonfiguration nur auf einem oder mehreren voreingestellten Netzwerkelementen auf dem LSP durchgeführt wird; wobei die Alarmdurchführungs-Konfigurationsinformationen des LSP ferner eine oder mehrere Arten der folgenden Informationen umfassen: Global-Alarm-Angabeinformationen zum Angeben, ob alle Alarme auf dem LSP zu überwachen sind und zum Angeben, ob alle Alarme auf dem LSP zu melden sind; Global-Durchführungs-Angabeinformationen zum Angeben, ob alle Durchführungen auf dem LSP zu überwachen sind und zum Angeben, ob alle Durchführungen auf dem LSP zu melden sind; Voreingestellter-Alarm-Angabeinformationen zum Angeben, ob voreingestellte Alarme auf dem LSP zu überwachen sind und zum Angeben, ob die voreingestellten Alarme auf dem LSP zu melden sind; und Voreingestellte-Durchführungs-Angabeinformationen zum Angeben, ob voreingestellte Durchführungen auf dem LSP zu überwachen sind und zum Angeben, ob die voreingestellten Durchführungen auf dem LSP zu melden sind;
Bestimmen durch das Netzwerkelement, ob die Alarmdurchführungskonfiguration auf dem Netzwerkelement durchgeführt werden muss, gemäß den Voreingestelltes-Netzwerkelement-Konfigurationsinformationen; und
Konfigurieren (102) eines Alarmdurchführungsattributs des Netzwerkelements durch das Netzwerkelement gemäß den Alarmdurchführungs-Konfigurationsinformationen des LSP, die in der Signalisierung geführt werden, wenn die Alarmdurchführungskonfiguration auf dem Netzwerkelement durchgeführt werden muss;
Übertragen der Signalisierung durch das Netzwerkelement zu einem nächsten Netzwerkelement des Netzwerkelements auf dem LSP.

2. Verfahren nach Anspruch 1, wobei
die Alarmdurchführungs-Konfigurationsinformationen des LSP die Global-Alarm-Angabeinformationen umfassen;
wenn die Global-Alarm-Angabeinformationen angeben, alle Alarme auf dem LSP zu überwachen, aber nicht zu melden,
das Konfigurieren des Alarmdurchführungsattributs des Netzwerkelements gemäß den in der Signalisierung geführten Alarmdurchfiihrungs-Konfigurationsinformationen des LSP dementsprechend das Konfigurieren des Alarmdurchführungsattributs des Netzwerkelements, alle Alarme auf dem LSP zu überwachen, aber nicht zu melden, umfasst; oder
wenn die Global-Alarm-Angabeinformationen angeben, alle Alarme auf dem LSP zu überwachen und zu melden,
das Konfigurieren des Alarmdurchfiihrungsattributs des Netzwerkelements gemäß den in der Signalisierung geführten Alarmdurchfiihrungs-Konfigurationsinformationen des LSP dementsprechend das Konfigurieren des Alarmdurchfiihrungsattributs des Netzwerkelements, alle Alarme auf dem LSP zu überwachen und zu melden, umfasst; oder
wenn die Global-Alarm-Angabeinformationen angeben, alle Alarme auf dem LSP nicht zu überwachen und nicht zu melden,
das Konfigurieren des Alarmdurchfiihrungsattributs des Netzwerkelements gemäß den in der Signalisierung geführten Alarmdurchführungs-Konfigurationsinformationen des LSP dementsprechend das Konfigurieren des Alarmdurchführungsattributs des Netzwerkelements, alle Alarme auf dem LSP nicht zu überwachen und nicht zu melden, umfasst.

3. Verfahren nach Anspruch 1, wobei
die Alarmdurchführungs-Konfigurationsinformationen des LSP die Global-Durchführüngs-Angabeinformationen umfassen;
wenn die Global-Alarm-Angabeinformationen angeben, alle Durchführungen auf dem LSP zu überwachen, aber nicht zu melden,
das Konfigurieren des Alarmdurchführungsattributs des Netzwerkelements gemäß den in der Signalisierung geführten Alarmdurchführungs-Konfigurationsinformationen des LSP dementsprechend das Konfigurieren des Alarmdurchführungsattributs des Netzwerkelements, alle Durchführungen auf dem LSP zu überwachen aber nicht zu melden, umfasst; oder
wenn die Global-Alarm-Angabeinformationen angeben, alle Durchführungen auf dem LSP zu überwachen und zu melden,
das Konfigurieren des Alarmdurchführungsattributs des Netzwerkelements gemäß den in der Signalisierung geführten Alarmdurchführungs-Konfigurationsinformationen des LSP dementsprechend das Konfigurieren des Alarmdurchführungsattributs des Netzwerkelements, alle Durchführungen auf dem LSP zu überwachen und zu melden, umfasst;
oder
wenn die Global-Alarm-Angabeinformationen angeben, alle Durchführungen auf dem LSP nicht zu überwachen und nicht zu melden,
das Konfigurieren des Alarmdurchführungsattributs des Netzwerkelements gemäß den in der Signalisierung geführten Alarmdurchfiihrungs-Konfigurationsinformationen des LSP dementsprechend das Konfigurieren des Alarmdurchführungsattributs des Netzwerkelements, alle Durchführungen auf dem LSP nicht zu überwachen und nicht zu melden, umfasst.

4. Verfahren nach Anspruch 1, wobei
die Alarmdurchführungs-Konfigurationsinformationen des LSP die Voreingestellter-Alarm-Angabeinformationen umfassen;
wenn die Voreingestellter-Alarm-Angabeinformationen angeben, einen oder mehrere voreingestellte Alarme zu überwachen, aber nicht zu melden,
das Konfigurieren des Alarmdurchführungsattributs des Netzwerkelements gemäß den in der Signalisierung geführten Alarmdurchführungs-Konfigurationsinformationen des LSP dementsprechend das Konfigurieren des Alarmdurchführungsattributs des Netzwerkelements, einen oder mehrere voreingestellte Alarme zu überwachen, aber nicht zu melden, umfasst; oder
wenn die Voreingestellter-Alarm-Angabeinformationen angeben, den einen oder die mehreren voreingestellten Alarme zu überwachen und zu melden,
das Konfigurieren des Alarmdurchführungsattributs des Netzwerkelements gemäß den in der Signalisierung geführten Alarmdurchfiihrungs-Konfigurationsinformationen des LSP dementsprechend das Konfigurieren des Alarmdurchführungsattributs des Netzwerkelements, den einen oder die mehreren voreingestellten Alarme zu überwachen und zu melden, umfasst; oder
wenn die Voreingestellter-Alarm-Angabeinformationen angeben, den einen oder die mehreren voreingestellten Alarme nicht zu überwachen und nicht zu melden,
das Konfigurieren des Alarmdurchführungsattributs des Netzwerkelements gemäß den in der Signalisierung geführten Alarmdurchfiihrungs-Konfigurationsinformationen des LSP dementsprechend das Konfigurieren des Alarmdurchführungsattributs des Netzwerkelements, den einen oder die mehreren voreingestellten Alarme nicht zu überwachen und nicht zu melden, umfasst.

5. Verfahren nach Anspruch 1, wobei
die Alarmdurchführungs-Konfigurationsinformationen des LSP die Voreingestellte-Durchführungs-Angabeinformationen umfassen;
wenn die Voreingestellter-Alarm-Angabeinformationen angeben, eine oder mehrere voreingestellte Durchführungen zu überwachen, aber nicht zu melden,
das Konfigurieren des Alarmdurchführungsattributs des Netzwerkelements gemäß den in der Signalisierung geführten Alarmdurchführungs-Konfigurationsinformationen des LSP dementsprechend das Konfigurieren des Alarmdurchführungsattributs des Netzwerkelements, die eine oder mehreren voreingestellten Durchführungen zu überwachen, aber nicht zu melden, umfasst; oder wenn die Voreingestellter-Alarm-Angabeinformationen angeben, die eine oder mehreren voreingestellten Durchführungen zu überwachen und zu melden,
das Konfigurieren des Alarmdurchführungsattributs des Netzwerkelements gemäß den in der Signalisierung geführten Alarmdurchführungs-Konfigurationsinformationen des LSP dementsprechend das Konfigurieren des Alarmdurchführungsattributs des Netzwerkelements, die eine oder mehreren voreingestellten Durchführungen zu überwachen und zu melden, umfasst; oder
wenn die Voreingestellter-Alarm-Angabeinformationen angeben, die eine oder mehreren voreingestellten Durchführungen nicht zu überwachen und nicht zu melden,
das Konfigurieren des Alarmdurchführungsattributs des Netzwerkelements gemäß den in der Signalisierung geführten Alarmdurchführungs-Konfigurationsinformationen des LSP dementsprechend das Konfigurieren des Alarmdurchführungsattributs des Netzwerkelements, die eine oder mehreren voreingestellten Durchführungen nicht zu überwachen und nicht zu melden, umfasst.

6. Verfahren nach einem der Ansprüche 1 bis 5, wobei, wenn die Alarmdurchführungs-Konfigurationsinformationen des LSP mehrere Arten von Informationen umfassen, die Alarmdurchführungs-Konfigurationsinformationen des LSP ferner eine oder mehrere Arten der folgenden Informationen umfassen:
Informationen zum Angeben einer Alarmunterdrückungsbeziehung auf dem LSP; und Informationen zum Angeben eines Alarmniveaus.

7. Verfahren nach Anspruch 1, wobei
wenn die Voreingestelltes-Netzwerkelement-Konfigurationsinformationen angeben, dass Alarmdurchführungskonfiguration auf einem oder mehreren voreingestellten Netzwerkelementen auf dem LSP durchgeführt wird,
das Bestimmen durch das Netzwerkelement, ob die Alarmdurchführungskonfiguration auf dem Netzwerkelement durchgeführt werden muss, gemäß den Voreingestelltes-Netzwerkelement-Konfigurationsinformationen Folgendes umfasst:
Bestimmen durch das Netzwerkelement, ob das Netzwerkelement zu den voreingestellten Netzwerkelementen gehört; und
Bestimmen, dass die Alarmdurchführungskonfiguration auf dem Netzwerkelement durchgeführt werden muss, wenn das Netzwerkelement zu den voreingestellten Netzwerkelementen gehört; oder
wenn die Voreingestelltes-Netzwerkelement-Konfigurationsinformationen angeben, dass die Alarmdurchführungskonfiguration auf dem einen oder den mehreren voreingestellten Netzwerkelementen auf dem LSP nicht durchgeführt wird,
das Bestimmen durch das Netzwerkelement, ob die Alarmdurchführungskonfiguration auf dem Netzwerkelement durchgeführt werden muss, gemäß den Voreingestelltes-Netzwerkelement-Konfigurationsinformationen Folgendes umfasst:
Bestimmen durch das Netzwerkelement, ob das Netzwerkelement zu den voreingestellten Netzwerkelementen gehört; und
Bestimmen, dass Alarmdurchführungskonfiguration auf dem Netzwerkelement durchgeführt werden muss, wenn das Netzwerkelement nicht zu den voreingestellten Netzwerkelementen gehört.

8. Netzwerkelement-Einrichtung, umfassend:
eine erste Konfigurationseinheit, die dafür ausgelegt ist, eine Signalisierung von einem vorherigen Netzwerkelement auf einem Label Switched Path, LSP, der Netzwerkelement-Einrichtung zu empfangen, wobei die Signalisierung Alarmdurchführungs-Konfigurationsinformationen des LSP der Netzwerkelement-Einrichtung führt, wobei die Alarmdurchführungs-Konfigurationsinformationen des LSP Informationen zum Angeben einer Alarmunterdrückungsbeziehung auf dem LSP umfassen, wobei die Signalisierung ferner Voreingestelltes-Netzwerkelement-Konfigurationsinformationen führt und die Voreingestelltes-Netzwerkelement-Konfigurationsinformationen dazu dienen, anzugeben, ob Alarmdurchführungskonfiguration nur auf einem oder mehreren voreingestellten Netzwerkelementen auf dem LSP durchgeführt wird; wobei die Alarmdurchführungs-Konfigurationsinformationen des LSP ferner eine oder mehrere Arten der folgenden Informationen umfassen: Global-Alarm-Angabeinformationen zum Angeben, ob alle Alarme auf dem LSP zu überwachen sind, und zum Angeben, ob alle Alarme auf dem LSP zu melden sind; Global-Durchführungs-Angabeinformationen zum Angeben, ob alle Durchführungen auf dem LSP zu überwachen sind, und zum Angeben, ob alle Durchführungen auf dem LSP zu melden sind; Voreingestellter-Alarm-Angabeinformationen zum Angeben, ob voreingestellte Alarme auf dem LSP zu überwachen sind, und zum Angeben, ob die voreingestellten Alarme auf dem LSP zu melden sind; und Voreingestellte-Durchführungs-Angabeinformationen zum Angeben, ob voreingestellte Durchführungen auf dem LSP zu überwachen sind, und zum Angeben, ob die voreingestellten Durchführungen auf dem LSP zu melden sind; und zu bestimmen, ob die Alarmdurchführungskonfiguration auf der Netzwerkelement-Einrichtung durchgeführt werden muss, gemäß den Voreingestelltes-Netzwerkelement-Konfigurationsinformationen und ein Alarmdurchführungsattribut der Netzwerkelement-Einrichtung gemäß den in der Signalisierung geführten Alarmdurchführungs-Konfigurationsinformationen des LSP zu konfigurieren, wenn die Alarmdurchführungskonfiguration auf dem Netzwerkelement durchgeführt werden muss.

9. Netzwerkelement-Einrichtung nach Anspruch 8, ferner umfassend:
eine erste Sendeeinheit, die dafür ausgelegt ist, die Signalisierung zu einem nächsten Netzwerkelement der Netzwerkelement-Einrichtung auf dem LSP zu übertragen.

10. Netzwerkelement-Einrichtung, umfassend:
eine zweite Konfigurationseinheit, die dafür ausgelegt ist, Alarmdurchführungs-Konfigurationsinformationen eines Label Switched Path, LSP, der Netzwerkelement-Einrichtung zu beschaffen, wobei die Alarmdurchfiihrungs-Konfigurationsinformationen des LSP Informationen zum Angeben einer Alarmunterdrückungsbeziehung auf dem LSP umfassen, und eine Signalisierung einzuleiten, wobei die Signalisierung die Alarmdurchführungs-Konfigurationsinformationen des LSP und Voreingestelltes-Netzwerkelement-Konfigurationsinformationen führt, wobei die Voreingestelltes-Netzwerkelement-Konfigurationsinformationen dazu dienen, anzugeben, ob Alarmdurchführungskonfiguration nur auf einem oder mehreren voreingestellten Netzwerkelementen auf dem LSP durchgeführt wird, wobei die Alarmdurchführungs-Konfigurationsinformationen des LSP ferner eine oder mehrere Arten der folgenden Informationen umfassen:
Global-Alarm-Angabeinformationen zum Angeben, ob alle Alarme auf dem LSP zu überwachen sind, und zum Angeben, ob alle Alarme auf dem LSP zu melden sind;
Global-Durchführungs-Angabeinformationen zum Angeben, ob alle Durchführungen auf dem LSP zu überwachen sind, und zum Angeben, ob alle Durchführungen auf dem LSP zu melden sind; Voreingestellter-Alarm-Angabeinformationen zum Angeben, ob .voreingestellte Alarme auf dem LSP zu überwachen sind, und zum Angeben, ob die voreingestellten Alarme auf dem LSP zu melden sind; und
Voreingestellte-Durchführung-Angabeinformationen zum Angeben, ob voreingestellte Durchführungen auf dem LSP zu überwachen sind, und zum Angeben, ob die voreingestellten Durchführungen auf dem LSP zu melden sind; und
zu bestimmen, ob die Alarmdurchführungskonfiguration auf der Netzwerkelement-Einrichtung durchgeführt werden muss, gemäß den Voreingestelltes-Netzwerkelement-Konfigurationsinformationen und ein Alarmdurchführungsattribut der Netzwerkelement-Einrichtung gemäß den in der Signalisierung geführten Alarmdurchführungs-Konfigurationsinformationen des LSP zu konfigurieren, wenn die Alarmdurchführungskonfiguration auf dem Netzwerkelement durchgeführt werden muss; und
eine zweite Sendeeinheit, die dafür ausgelegt ist, die Signalisierung zu einem nächsten Netzwerkelement der Netzwerkelement-Einrichtung auf dem LSP zu übertragen.

11. System zum Konfigurieren der Alarmdurchführung, das ein Quellennetzwerkelement nach Anspruch 10 und ein Zielnetzwerkelement nach Anspruch 8, das sich auf einem Label Switched Path, LSP, befindet, umfasst.

12. System nach Anspruch 11, wobei ferner ein zwischengeschaltetes Netzwerkelement zwischen dem Quellennetzwerkelement und dem Zielnetzwerkelement auf dem LSP existiert und das zwischengeschaltete Netzwerkelement für Folgendes ausgelegt ist:
Empfangen einer Signalisierung von einem vorherigen Netzwerkelement des zwischengeschalteten Netzwerkelements auf dem LSP und Konfigurieren eines Alarmdurchführungsattributs des zwischengeschalteten Netzwerkelements gemäß in der Signalisierung geführten Alarmdurchführungs-Konfigurationsinformationen des LSP;und
Übertragen der Signalisierung zu einem nächsten Netzwerkelement des zwischengeschalteten Netzwerkelements auf dem LSP.

## Revendications

1. Procédé de configuration d'une performance d'alarme, comprenant :
l'acquisition (101), par un élément de réseau sur un Chemin Commuté par Etiquette, LSP, d'une signalisation, la signalisation incluant des informations de configuration de performance d'alarme du LSP, les informations de configuration de performance d'alarme du LSP comprenant des informations pour indiquer une relation de suppression d'alarme sur le LSP, la signalisation incluant en outre des informations de configuration d'éléments de réseau préétablis, et les informations de configuration d'éléments de réseau préétablis servant à indiquer que la configuration de performance d'alarme est exécutée uniquement sur un ou plusieurs éléments de réseau préétablis sur le LSP ; les informations de configuration de performance d'alarme du LSP comprenant en outre un ou plusieurs types des informations suivantes : informations d'indication d'alarmes globales, pour indiquer s'il convient ou non de surveiller toutes les alarmes sur le LSP et indiquer s'il convient ou non de rapporter toutes les alarmes sur le LSP ; des informations d'indication de performances globales, pour indiquer s'il convient ou non de surveiller toutes les performances sur le LSP et indiquer s'il convient ou non de rapporter toutes les performances sur le LSP ; des informations d'indication d'alarmes préétablies, pour indiquer s'il convient ou non de surveiller des alarmes préétablies sur le LSP et indiquer s'il convient ou non de rapporter les alarmes préétablies sur le LSP ; et des informations d'indication de performances préétablies, pour indiquer s'il convient ou non de surveiller des performances préétablies sur le LSP et indiquer s'il convient ou non de rapporter les performances préétablies sur le LSP ;
la détermination, par l'élément de réseau, que la configuration de performance d'alarme doit ou non être effectuée sur l'élément de réseau en fonction des informations de configuration d'éléments de réseau préétablie ; et
la configuration (102), par l'élément de réseau, d'un attribut de performance d'alarme de l'élément de réseau en fonction des informations de configuration de performance d'alarme du LSP incluses dans la signalisation si la configuration de performance d'alarme doit être effectuée sur l'élément de réseau ;
la transmission, par l'élément de réseau, de la signalisation à un élément de réseau suivant de l'élément de réseau sur le LSP.

2. Procédé selon la revendication 1, dans lequel :
les informations de configuration de performance d'alarme du LSP comprennent les informations d'indication d'alarmes globales ;
quand les informations d'indication d'alarmes globales indiquant qu'il convient de surveiller mais de ne pas rapporter toutes les alarmes sur le LSP ;
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour surveiller mais ne pas rapporter toutes les alarmes sur le LSP ; ou
quand les informations d'indication d'alarmes globales indiquent qu'il convient de surveiller et de rapporter toutes les alarmes sur le LSP,
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour surveiller et rapporter toutes les alarmes sur le LSP ;
ou
quand les informations d'indication d'alarmes globales indiquent qu'il convient de ne pas surveiller et de ne pas rapporter toutes les alarmes sur le LSP,
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour ne pas surveiller et ne pas rapporter toutes les alarmes sur le LSP.

3. Procédé selon la revendication 1, dans lequel :
les informations de configuration de performance d'alarme du LSP comprennent les informations d'indication de performance globales ;
quand les informations d'indication d'alarmes globales indiquent qu'il convient de surveiller mais de ne pas rapporter toutes les performances sur le LSP ;
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour surveiller mais ne pas rapporter toutes les performances sur le LSP ; ou
quand les informations d'indication d'alarmes globales indiquent qu'il convient de surveiller et de rapporter toutes les performances sur le LSP,
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour surveiller et rapporter toutes les performances sur le LSP ;
ou
quand les informations d'indication d'alarmes globales indiquent qu'il convient de ne pas surveiller et de ne pas rapporter toutes les performances sur le LSP,
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour ne pas surveiller et ne pas rapporter toutes les performances sur le LSP.

4. Procédé selon la revendication 1, dans lequel :
les informations de configuration de performance d'alarme du LSP comprennent les informations d'indication d'alarmes préétablies ;
quand les informations d'indication d'alarmes préétablies indiquent qu'il convient de surveiller mais de ne pas rapporter une ou plusieurs alarmes préétablies ;
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour surveiller mais ne pas rapporter une ou plusieurs alarmes préétablies ; ou
quand les informations d'indication d'alarmes préétablies indiquent qu'il convient de surveiller et de rapporter les une ou plusieurs alarmes préétablies,
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour surveiller et rapporter les une ou plusieurs alarmes préétablies ; ou
quand les informations d'indication d'alarmes préétablies indiquent qu'il convient de ne pas surveiller et de ne pas rapporter les une ou plusieurs alarmes préétablies, la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour ne pas surveiller et ne pas rapporter les une ou plusieurs alarmes préétablies.

5. Procédé selon la revendication 1, dans lequel :
les informations de configuration de performance d'alarme du LSP comprennent les informations d'indication de performances préétablies ;
quand les informations d'indication d'alarmes préétablies indiquent qu'il convient de surveiller mais de ne pas rapporter une ou plusieurs performances préétablies ;
la configuration de l'attribut de performance d'alarme de l'élément de réseau en fonction des informations de configuration de performance d'alarme du LSP incluses dans la signalisation comprend la configuration de l'attribut de performance d'alarme de l'élément de réseau pour surveiller mais ne pas rapporter les une ou plusieurs performances préétablies ; ou
quand les informations d'indication d'alarmes préétablies indiquent qu'il convient de surveiller et de rapporter les une ou plusieurs performances préétablies,
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour surveiller et rapporter les une ou plusieurs performances préétablies ; ou
quand les informations d'indication d'alarmes préétablies indiquent qu'il convient de ne pas surveiller et de ne pas rapporter les une ou plusieurs alarmes préétablies,
la configuration de l'attribut de performance d'alarme de l'élément de réseau en fonction des informations de configuration de performance d'alarme du LSP incluses dans la signalisation comprend alors la configuration de l'attribut de performance d'alarme de l'élément de réseau pour ne pas surveiller et ne pas rapporter les une ou plusieurs performances préétablies.

6. Procédé selon l'une quelconque des revendications 1 à 5, dans lequel, quand les informations de configuration de performance d'alarme du LSP comprennent plusieurs types d'informations, les informations de configuration de performance d'alarme du LSP comprennent en outre un ou plusieurs types des informations suivantes :
des informations pour indiquer une relation de suppression d'alarme sur le LSP, et des informations pour indiquer un niveau d'alarme.

7. Procédé selon la revendication 1, dans lequel :
quand les informations de configuration d'éléments de réseau préétablis indiquent que la configuration de performance d'alarme est effectuée sur un ou plusieurs éléments de réseau sur le LSP,
la détermination, par l'élément de réseau, que la configuration de performance d'alarme ou non doit être effectuée sur l'élément de réseau en fonction des informations de configuration d'éléments de réseau préétablis comprend :
la détermination, par l'élément de réseau, que l'élément de réseau appartient ou non aux éléments de réseau préétablis ; et
la détermination que la configuration de performance d'alarme doit être effectuée sur l'élément de réseau, si l'élément de réseau appartient aux éléments de réseau préétablis ; ou
quand les informations de configuration d'éléments de réseau préétablis indiquent que la configuration de performance d'alarme n'est pas effectuée sur les un ou plusieurs éléments de réseau préétablis sur le LSP,
la détermination, par l'élément de réseau, que la configuration de performance d'alarme doit ou non être effectuée sur l'élément de réseau en fonction des informations de configuration d'éléments de réseau préétablis comprend :
la détermination, par l'élément de réseau, que l'élément de réseau appartient ou non aux éléments de réseau préétablis ; et
la détermination que la configuration de performance d'alarme doit être effectuée sur l'élément de réseau, si l'élément de réseau n'appartient pas aux éléments de réseau préétablis.

8. Dispositif d'élément de réseau, comprenant :
une première unité de configuration, adaptée pour recevoir une signalisation depuis un dispositif d'élément de réseau antérieur sur un Chemin Commuté par Etiquette, LSP, du dispositif d'élément de réseau, la signalisation comportant des informations de configuration de performance d'alarme du LSP du dispositif d'élément de réseau, les informations de configuration de performance d'alarme du LSP comprenant des informations pour indiquer une relation de suppression d'alarme sur le LSP, la signalisation incluant en outre des informations de configuration d'éléments de réseau préétablis, et les informations de configuration d'éléments de réseau préétablis servant à indiquer que la configuration de performance d'alarme est ou non exécutée uniquement sur un ou plusieurs éléments de réseau préétablis sur le LSP ; les informations de configuration de performance d'alarme du LSP comprenant en outre un ou plusieurs types des informations suivantes : informations d'indication d'alarmes globales, pour indiquer s'il convient ou non de surveiller toutes les alarmes sur le LSP et indiquer s'il convient ou non de rapporter toutes les alarmes sur le LSP ; des informations d'indication de performances globales, pour indiquer s'il convient ou non de surveiller toutes les performances sur le LSP et indiquer s'il convient ou non de rapporter toutes les performances sur le LSP ; des informations d'indication d'alarmes préétablies, pour indiquer s'il convient ou non de surveiller des alarmes préétablies sur le LSP et indiquer s'il convient ou non de rapporter les alarmes préétablies sur le LSP ; et des informations d'indication de performances préétablies, pour indiquer s'il convient ou non de surveiller des performances préétablies sur le LSP et indiquer s'il convient ou non de rapporter les performances préétablies sur le LSP ; et déterminer que la configuration de performance d'alarme doit ou non être effectuée sur le dispositif d'élément de réseau en fonction des informations de configuration d'éléments de réseau préétablis, et configurer un attribut de performance d'alarme du dispositif d'élément de réseau en fonction des informations de configuration de performance d'alarme du LSP incluses dans la signalisation si la configuration de performance d'alarme doit être effectuée sur l'élément de réseau.

9. Dispositif d'élément de réseau selon la revendication 8, comprenant en outre :
une première unité d'envoi, adaptée pour transmettre la signalisation à un élément de réseau suivant du dispositif d'élément de réseau sur le LSP.

10. Dispositif d'élément de réseau , comprenant :
une seconde unité de configuration, adaptée pour acquérir des informations de configuration de performance d'alarme d'un Chemin Commuté par Etiquette, LSP, du dispositif d'élément de réseau, les informations de configuration de performance d'alarme du LSP comprenant des informations pour indiquer une relation de suppression d'alarme sur le LSP, et lancer une signalisation, la signalisation incluant les informations de performance d'alarme du LSP, et des informations de configuration d'éléments de réseau préétablis, les informations de configuration d'éléments de réseau préétablis servant à indiquer que la configuration de performance d'alarme est ou non exécutée uniquement sur un ou plusieurs éléments de réseau préétablis sur le LSP, les informations de configuration de performance d'alarme du LSP comprenant en outre un ou plusieurs types des informations suivantes : informations d'indication d'alarmes globales, pour indiquer s'il convient ou non de surveiller toutes les alarmes sur le LSP et indiquer s'il convient de rapporter toutes les alarmes sur le LSP ; des informations d'indication de performances globales, pour indiquer s'il convient ou non de surveiller toutes les performances sur le LSP et indiquer s'il convient ou non de rapporter toutes les performances sur le LSP ; des informations d'indication d'alarmes préétablies, pour indiquer s'il convient ou non de surveiller des alarmes préétablies sur le LSP et indiquer s'il convient ou non de rapporter les alarmes préétablies sur le LSP ; et des informations d'indication de performances préétablies, pour indiquer s'il convient ou non de surveiller des performances préétablies sur le LSP et indiquer s'il convient ou non de rapporter les performances préétablies sur le LSP ; et déterminer que la configuration de performance d'alarme doit ou non être effectuée sur le dispositif d'élément de réseau en fonction des informations de configuration d'élément de réseau préétablies, et configurer un attribut de performance d'alarme du dispositif d'élément de réseau en fonction des informations de configuration de performance d'alarme du LSP incluses dans la signalisation si la configuration de performance d'alarme doit être effectuée sur l'élément de réseau ; et
une seconde unité d'envoi, adaptée pour transmettre la signalisation à un élément de réseau suivant du dispositif d'élément de réseau sur le LSP.

11. Système de configuration de performance d'alarme, comprenant un élément de réseau source selon la revendication 10, et un élément de réseau destinataire selon la revendication 8, situés sur un Chemin Commuté par Etiquette, LSP.

12. Système selon la revendication 11, dans lequel un élément de réseau intermédiaire existe entre l'élément de réseau source et l'élément de réseau destinataire sur le LSP, et l'élément de réseau intermédiaire est adapté pour :
recevoir une signalisation depuis un élément de réseau antérieur de l'élément de réseau intermédiaire sur le LSP, et configurer un attribut de performance d'alarme de l'élément de réseau intermédiaire en fonction d'informations de configuration de performances d'alarme du LSP incluses dans la signalisation ; et
transmettre la signalisation à un élément de réseau suivant de l'élément de réseau intermédiaire sur le LSP.
